Europäisches Patentamt

European Patent Office

Office européen des brevets

(19)

(11) Veröffentlichungsnummer : **0 060 980**
**B1**

(12) **EUROPÄISCHE PATENTSCHRIFT**

(45) Veröffentlichungstag der Patentschrift :
28.08.85

(21) Anmeldenummer : 82100791.1

(22) Anmeldetag : 04.02.82

(51) Int. Cl.⁴ : **B 23 K 26/14**

(54) **Vorrichtung zum Brennschneiden mittels eines Laserstrahls.**

(30) Priorität : **17.03.81 DE 3110235**

(43) Veröffentlichungstag der Anmeldung :
**29.09.82 Patentblatt 82/39**

(45) Bekanntmachung des Hinweises auf die Patenterteilung : **28.08.85 Patentblatt 85/35**

(84) Benannte Vertragsstaaten :
**CH FR GB LI**

(56) Entgegenhaltungen :
**EP-A- 0 008 773
DE-A- 2 338 514
FR-A- 2 463 658
GB-A- 2 064 399
US-A- 4 002 877**

(73) Patentinhaber : **Trumpf GmbH & Co
Postfach 1320 Johann-Maus-Strasse 2
D-7257 Ditzingen (DE)**

(72) Erfinder : **Klingel, Hans
Teckstrasse 91
D-7141 Möglingen (DE)**

(74) Vertreter : **Schmid, Berthold et al
Patentanwälte Dipl.-Ing. B. Schmid Dr. Ing. G. Birn
Dipl.-Phys. H. Quarder Falbenhennenstrasse 17
D-7000 Stuttgart 1 (DE)**

Jouve, 18, rue St-Denis, 75001 Paris, France

**Beschreibung**

Die Erfindung bezieht sich auf eine Vorrichtung zum Brennschneiden von Werkstücken, insbesondere von Blechtafeln, mittels eines Laserstrahls mit einer der momentanen Ein- und/oder Austrittsstelle des Laserstrahls am Werkstück flüssiges Kühlmedium zuführenden Kühlvorrichtung. Eine derartige Vorrichtung ist durch die DE-A-2 338 514 bekanntgeworden. Durch das Kühlen der momentanen Ein- und/oder Austrittsstelle des Laserstrahls am Werkstück, wird dessen thermische Belastung erheblich reduziert. Andererseits ist aber die thermische Belastung des Werkstücks abhängig von der Form der Brennspur. Legt man die Kühlung für Stellen besonders hoher thermischer Belastung aus, so ist sie an Stellen geringerer thermischer Belastung unnötig hoch. Nimmt man hingegen einen Mittelwert, so ist die Kühlung an Stellen geringer thermischer Belastung immer noch zu hoch und an Stellen hoher thermischer Belastung nicht ausreichend.

Die Aufgabe der Erfindung besteht infolgedessen darin, die Vorrichtung der eingangs genannten Art so weiterzubilden, daß die Kühlung während der gesamten Bearbeitungszeit stets optimal ist.

Zur Lösung dieser Aufgabe wird erfindungsgemäß vorgeschlagen, daß die Vorrichtung gemäß dem Oberbegriff des Patentanspruchs entsprechend dem kennzeichnenden Teil desselben ausgebildet ist. Weil nunmehr die Kühlmittelzufuhr und/oder die Laserleistung in Abhängigkeit von der Relativbewegung zwischen Werkstück und Laserstrahldüse mittels der Steuerungseinrichtung für diese Relativbewegung steuerbar ist, kann man an Stellen hoher thermischer Belastung die Kühlmittelzufuhr und damit die Kühlleistung steigern und/oder die Laserleistung etwas zurücknehmen. An Stellen geringer thermischer Belastung, also beim Brennschneiden entlang einer geraden oder bei schwach gekrümmter Brennspur, kann man vorzugsweise mit voller Laserleistung fahren und die Kühlmittelzufuhr auf einen kleineren Wert drosseln. Kritische stellen mit hoher thermischer Belastung sind Unstetigkeitsstellen, also Ecken und Kanten oder Winkel, sowie Brennspuren zum Ausbrennen schmaler Zungen und dergleichen, wo innerhalb kurzer Zeitabstände die beiden Längskanten einer solchen Zunge od. dgl. erstellt werden. Die Erhöhung der Kühlmittelzufuhr und/oder die reduzierung der Laserleistung kann stetig erfolgen, wenn eine Krümmung fortlaufend stärker wird. Entsprechendes gilt für eine abnehmende Krümmung, wo man die Kühlung mit fortlaufendem Erstellen der Brennspur stetig vermindert und/oder die Laserleistung stetig steigert. Auf diese Weise vermeidet man örtliche Überhitzungen und damit schaltet man das Risiko einer fehlerhaften oder gar unbrauchbaren Produktion aus.

Laserschneidvorrichtungen sind in aller Regel mit einer numerischen Steuerung ausgestattet. Für einen Steuerungsfachmann ist es ohne weiteres möglich, beim Programmieren der Verschiebebewegung für das Werkstück und/oder die Laserdüse das Programm so auszulegen, daß aus dem Befehl zum Durchfahren einer engen Biegung, einer Unstetigkeitsstelle oder nah beeinander liegender paralleler Strecken zugleich auch entsprechende Steuerbefehle an eine Vorrichtung zur Veränderung der Laserleistung und/oder des Kühlmittelstromes gegeben werden. Der Kühlmittelstrom kann in allereinfachster Weise, beispielsweise mit Hilfe eines Steuerventils, verstärkt bzw. abgeschwächt werden.

In der Zeichnung ist ein Ausführungsbeispiel der Erfindung dargestellt. Es zeigen :
Figur 1 perspektivisch und schematisiert eine kombinierte Maschine zum Stanzen oder Nibbeln und zum Brennschneiden mit Hilfe eines Laserstrahls,
Figur 2 in vergrößertem Maßstab eine abgebrochene Darstellung der Laser-Brennschneidvorrichtung,
Figur 3 in der Draufsicht einen Ausschnitt aus einem Werkstück mit einer teilweise ausgebrannten Kontur.

An dem im wesentlichen etwa C-förmigen Maschinenkörper 1 befindet sich eine Koordinatenführung 2 für das vorzugsweise plattenförmige Werkstück 3, die eine Längsführung 4 und eine Querführung 5 umfaßt. Dabei besteht dann ihrerseits die Längsführung 4 aus einer fest mit dem Maschinenkörper 1 verbundenen Laufschiene 6 und einem daran im Sinne des Doppelpfeils 6 verschiebbar geführten Laufwagen 8. Die Verschiebebewegung erzielt man vorzugsweise mit Hilfe eines Antriebsmotors 9, der ein Ritzel 10 antreibt. Dieses greift in eine Verzahnung der als Zahnstange ausgebildeten Laufschiene 6 ein.

Der Laufwagen 8 trägt noch einen zweiten Antriebsmotor 11 mit einem Ritzel 12. Dessen Zähne kämmen mit denjenigen einer Tragschiene 13, die ebenfalls wenigstens zum Teil als Zahnstange gestaltet ist oder eine solche hält. Mit Hilfe des zweiten Antriebsmotors 11 kann man die Tragschiene 13 im Sinne des Doppelpfeils 14 hin- und herverschieben. Die beiden Bewegungsrichtungen 7 und 14 verlaufen senkrecht zueinander.

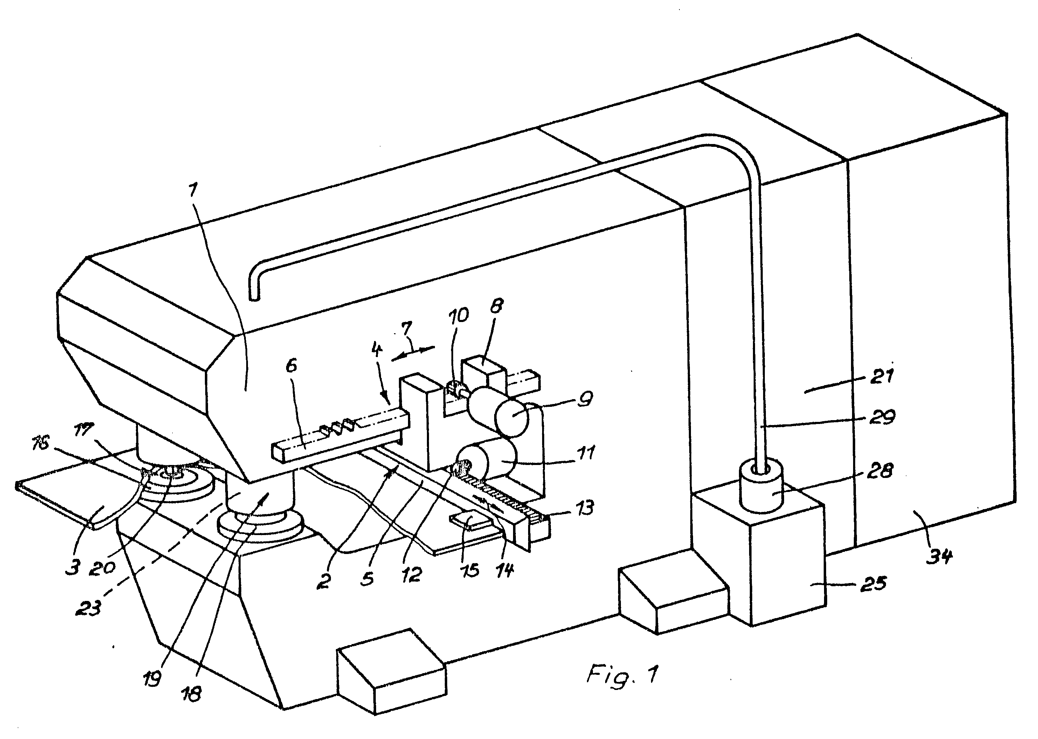

An der Tragschiene 13 befinden sich vorzugsweise zwei Pratzen 15, zwischen denen das plattenförmige Werkstück 3 eingeklemmt ist und von denen in Fig. 1 eine zu sehen ist. Das Werkstück kann mit Hilfe des Antriebsmotors 9 eine Verschiebebewegung im Sinne des Doppelpfeils 7 und mittels des Antriebsmotors 11 eine Verstellbewegung in Richtung des Doppelpfeils 14 ausführen. Bei gleichzeitigem Lauf beider Motoren 9 und 11 erzielt man eine überlagerte Längs- und Querbewegung. Das Werkstück 3 stützt sich außerdem noch auf der Matrize 16 der Stanzeinrichtung 17 und gegebenenfalls einer Auflage 18 unterhalb der Laser-Brennschneidvorrichtung 19 ab. Die Matrize 16 der Stanzeinrichtung 17 arbeitet mit einem Stanzstempel 20 zusammen. Die Stanzeinrichtung 17 ist von bekannter Bauart, weswegen sie nicht näher dargestellt und beschrieben ist.

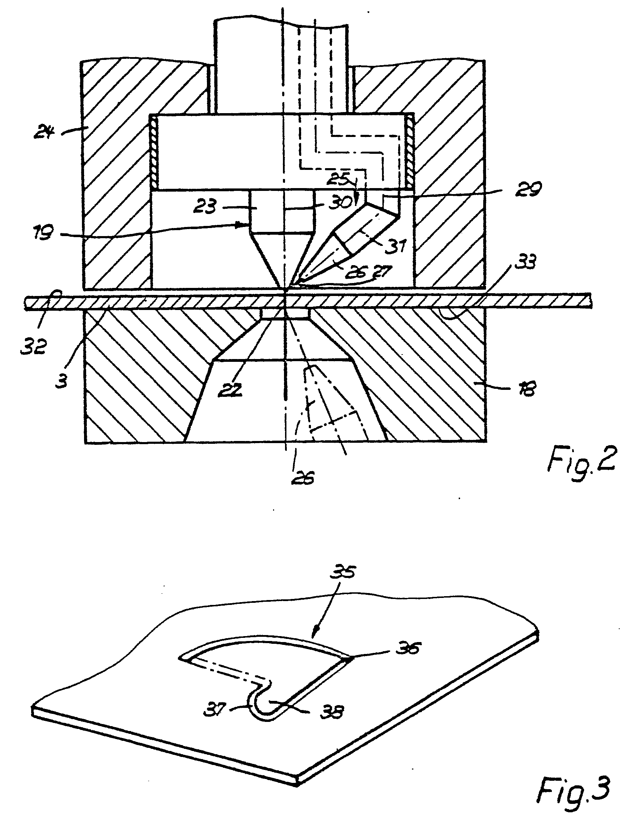

Auch die Laser-Brennschneidvorrichtung 19 ist von bekannter Konstruktion, so daß auch insoweit auf eine detaillierte Beschreibung und Darstellung verzichtet werden kann. Ihre Steuerungseinrichtung 21 ist schematisch angedeutet, und sie enthält zugleich auch alles Notwendige zur Erzeugung des Laserstrahls 22. Der Vorrichtungsteil mit der Bündelungseinrichtung für den austretenden Laserstrahl 22 ist mit 23 bezeichnet und in Fig. 2 schematisch eingezeichnet. Er wird in bevorzugter Weise von einer Art Glocke 24 umgeben. Innerhalb derselben befindet sich auch das Abgabeende der Kühlvorrichtung 25 mit der Austrittsdüse 26 für den Kühlmittelstrahl 27. In Fig. 1 ist der Hauptteil der Kühlvorrichtung 25 schematisch eingezeichnet. Er umfaßt eine Pumpe 28, welche über die Leitung 29 mit der Düse 26 in Verbindung steht. Falls sich sowohl der Vorrichtungsteil 23 der Laser-Brennschneidvorrichtung 19 als auch die Düse 26 mit ihrer nicht gezeigten Halterung und der angeschlossenen Leitung 29 auf ein und derselben Seite, beispielsweise oberhalb des Werkstücks 3 befinden, kreuzen sich die geometrischen Achsen 30 des Laserstrahls 22 bzw. 31 des Kühlmittelstrahls 27 vorzugsweise auf der Oberfläche 32 des Werkstücks 3 oder auch an einer gedachten, etwas darunterliegenden Stelle, jedoch ist dies keine Notwendigkeit für ein gutes Arbeitsergebnis. Der Übersichtlichkeit wegen wurde der Durchmesser des Laserstrahls 22 vergleichsweise groß gezeichnet, obwohl er in der Größenordnung von etwa 1/10 mm liegt. Demgegenüber kann der Wasserstrahl im Durchmesser mehrere Millimeter oder noch mehr umfassen. Insofern ist es auch nicht unbedingt notwendig, daß beide genau an derselben Stelle auf der Oberfläche 32 des Werkstücks auftreffen, weil auch bei seitlich versetztem Auftreffen des Flüssigkeitsstrahls 27 der Werkstückbereich an der momentanen Schneidstelle ausreichend gekühlt wird.

In nicht gezeigter Weise ist es auch möglich, der nach oben weisenden Oberfläche 32 des Werkstücks 3 das Vorrichtungsteil 23 der Laser-Brennschneidvorrichtung 19 und der Unterseite 33 die Austrittsdüse 26 zuzuordnen. Schließlich kann man sowohl an der Oberseite als auch der Unterseite des Werkstücks 3 mit Flüssigkeit kühlen. In ebenfalls nicht dargestellter Art kann man anstelle einer einzigen, seitlich angeordneten Düse, auch einen Ring von Düsen um den Laserstrahl 22 anordnen oder eine entsprechend ausgebildete, rohrförmige Düse, welche einen Wassermantel abgibt, verwenden.

Die Steuerung des Werkstückvorschubs erfolgt über eine Steuerungseinrichtung 34, welche insbesondere eine Programmsteuerung umfaßt, mit deren Hilfe das Werkstück gemäß dem vorgesehenen Programm in ganz bestimmter Weise gegenüber dem ortsfesten Vorrichtungsteil 23 der Laser-Brennschneidvorrichtung 19 verfahren wird. Mit Hilfe dieser Steuerungseinrichtung 34 kann man auch die Pumpe 28 steuern, so daß in Abhängigkeit von der Krümmung der Brennschneidspur 35 oder einem anderen Kriterium wie beispielsweise parallele Brennspuren die austretende Flüssigkeitsmenge verändert, z. B. erhöht wird. Vor allen Dingen bei Unstetigkeitsstellen 36 oder bei engen Radien 37 muß wegen der verringerten Verschiebegeschwindigkeit des Werkstücks 3 — im ersteren Falle ist kurzzeitig sogar ein Stillstand des Werksstücks 3 erforderlich — in erhöhtem Maße gekühlt werden. Dasselbe gilt auch beim Brennschneiden schmaler Stege 38, weil dabei im Steg die Wärmeabfuhr über die benachbarten Materialzonen nicht möglich oder zumindest wesentlich erschwert ist.

## Patentanspruch

Vorrichtung zum Brennschneiden von Werkstücken, insbesondere von Blechtafeln, mittels eines Laserstrahls mit einer der momentanen Ein- und/oder Austrittsstelle des Laserstrahls am Werkstück flüssiges Kühlmedium zuführenden Kühlvorrichtung, dadurch gekennzeichnet, daß die Kühlmittelzufuhr und/oder die Laserleistung in Abhängigkeit von der Relativbewegung zwischen Werkstück und Laserstrahldüse mittels der Steuerungseinrichtung für diese relativbewegung steuerbar sind, wobei mit zunehmender Krümmung der Bewegungsbahn oder an einer Unstetigkeitsstelle oder zunehmender Nähe einander benachbarter, in kurzen Zeitabständen zu erstellender Brennspuren die Laserleistung reduziert bzw. die Kühlmittelmenge vergrößert werden.

## Claim

Device for the flame cutting of workpieces, particularly sheet metal, by means of a laser beam with a cooling device for feeding liquid coolant to the points at which the laser beam strikes and/or emerges from the metal sheet at any given time, characterised in that the feed of coolant and/or the laser power can be controlled as a function of the relative movement between workpiece and laser beam nozzle by means of the device which controls this relative movement, whereby with increasing curvature of the path of movement or at a site of inconstancy or with incrasing proximity of mutually adjacent cutting paths which have to be prepared at brief intervals, the laser power is reduced or the quantity of coolant is increased.

## Revendication

Dispositif d'oxycoupage de pièces, notamment de tôles, à l'aide d'un rayon laser avec un dispositif de refroidissement servant à l'alimentation en fluide réfrigérant du point d'entrée et/ou de sortie momentané du rayon laser sur la pièce, caractérisé en ce que l'alimentation en réfrigérant et/ou la puissance du laser est réglable en fonction du mouvement relatif entre la pièce et la buse du rayon laser à l'aide de l'équipement de commande de ce mouvement relatif, la puissance du laser étant réduite et la quantité de réfrigérant étant augmentée lorsque la courbure de la trajectoire du mouvement augmente ou en un point de discontinuation ou à proximité croissante de traces d'oxycoupage proches les unes des autres et à réaliser dans des laps de temps courts.

Fig. 1

0 060 980

Fig.2

Fig.3